# EUROPEAN PATENT APPLICATION

(11) **EP 2 709 227 A1**
(43) Date of publication of application: **19.03.2014**
(21) Application number: 13275210.6
(22) Date of filing: 12.09.2013
(51) Int. Cl.: H02H 3/20

(54) **Overvoltage protection circuit**

(30) Priority: 13.09.2012 AU 2012101415
(71) Applicant: Gerard Lighting Pty Ltd, 5067 Rose Park South Australia (AU)
(72) Inventor: Vanderzon, James, Rose Park, South Australia 5067 (AU)
(74) Representative: Vigars, Christopher Ian

(57) **Abstract**

An overvoltage protection circuit for protecting a DALI bus against inadvertent connection of the mains comprising a current source (Q1, Q2, R4, R6, R7) switched in response to a voltage monitor (R1, R2, R3, R8, C1, D1, Q4). The circuit switches off rapidly and on slowly to prevent partial mains supply during fault conditions.

## Description

### FIELD OF THE INVENTION

This invention relates to an overvoltage protection circuit, in particular a circuit for protecting DALI (Digital Addressable Lighting Interface) equipment against inadvertent mains connections to data lines.

### BACKGROUND TO THE INVENTION

DALI (Digital Addressable Lighting Interface) equipment is used to control mains powered lighting. A DALI device receives control signals over a bus separated from the mains and can optionally derive some or all of its own power from this bus; however it has been specified that DALI equipment must be able to survive connection of the mains to the control bus. As the DALI bus operates at a nominal 0 - 18 Volts and peak mains voltage can be 400 Volts, this poses a design challenge that has not been suitably addressed by known prior art devices. The challenge is further complicated in that the mains applied may itself be switched in or applied at any randomly selected point in a sinusoidal mains half-cycle.

A protection circuit must be able to withstand continuous mains; instantaneous application of peak mains; mains with switch bounce; phase switched mains, or any combination thereof. As well as protecting against mains voltage a protection circuit must not interfere with the normal DALI signal, being a nominal 18 Volts to supply power that is switched to 0V to provide signaling. Preferably a protection circuit will not pass any power under a fault condition so that output circuitry is held turned off after the detection of mains.

Some approaches to mains protection have incorporated bypass devices such as Zener diodes or PTC resistors. These solutions are prone to produce excessive heat and require physically large and expensive devices to handle the necessary power. Such a solution will also pass a limited amount of power to downstream circuits under fault conditions.

Another approach is to use Zener diodes and transistors to make a voltage detector switch. Such a circuit switches its output off when the input voltage crosses some threshold. Such a circuit has the disadvantage of not providing a current limited output. This type of circuit will also pass a limited amount of power to downstream circuits under fault conditions, because each cycle of mains includes periods where the voltage is low and the threshold detector has not cut the output off.

Other designs incorporating current limiting, such as current sources, are also known. These circuits typically take up to 1.5 half cycles of mains to activate and thus require the use of high power rated devices making them bulky and expensive

The object of this invention is to provide an overvoltage protection circuit that alleviates the above problems, or at least provides the public with a useful alternative.

### SUMMARY OF THE INVENTION

Therefore in one form of the invention there is proposed an overvoltage protection circuit comprising a supply input, a supply output, a voltage monitor connected to monitor the supply input, a current source driven by the supply input and driving the supply output and a switching circuit to enable or disable the current source driven by an output of the voltage monitor, wherein when the supply input voltage is less than a predetermined threshold the current source is enabled and when the supply input voltage is greater than said predetermined threshold voltage the current source is disabled.

It should be noted that any one of the aspects mentioned above may include any of the features of any of the other aspects mentioned above and may include any of the features of any of the embodiments described below as appropriate.

### BRIEF DESCRIPTION OF THE DRAWINGS

The accompanying drawings, which are incorporated in and constitute a part of this specification, illustrate a representative implementation of the invention and, together with the description, serve to explain the advantages and principles of the invention.

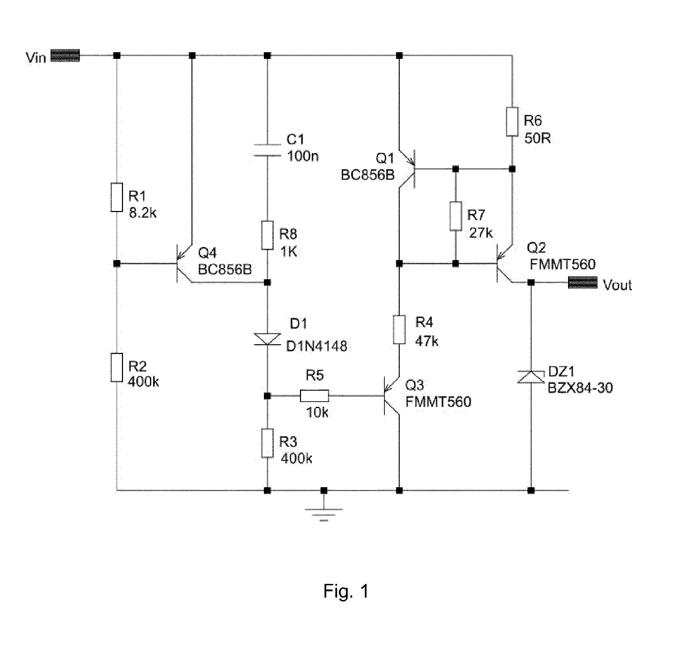

Figure 1 is a schematic diagram of an overvoltage protection circuit of the present invention.

### DETAILED DESCRIPTION OF THE INVENTION

The following detailed description of the invention refers to the accompanying drawings. Wherever possible, the same reference numbers will be used throughout the drawings and the following description to refer to the same and like parts.

The invention is an overvoltage protection circuit provided by means of a current source which can be rapidly switched off in response to overvoltage detection and switched on again slowly once the overvoltage condition has passed.

The component values chosen are representative of a specific implementation the general concept, alternative values could well be chosen without deviating from the scope of the invention. Components not relevant to the present invention such as decoupling and EMC filtering components have been omitted for the sake of clarity.

A schematic diagram of the overvoltage protection circuit is shown in Figure 1. Q1 and Q2 form a current source which is turned on or off by Q3 in response to the output of the overvoltage detection circuit formed around Q4.

The circuit is intended to operate in a DALI system with a valid operating voltage range of 9.5 to 22.5 Volts. Allowing 2V for cable loss and a bridge rectifier preceding the circuit, Vin can be expected to vary nominally between Vin min = 7.5V and Vin max = 20.5V. Giving some headroom to the maximum voltage a design cut-off voltage of Vin max = 30V is suitable. When signaling is present on the lines, the input will be pulled to somewhere in the range 0V to about 5 V, with a nominal period of 0.833 milliseconds.

During a fault condition a nominal 240Vrms fault signal can be expected which has a peak of approximately 400V. As the fault signal may be sourced directly from the mains, via electrical control gear or mechanical switches it may have an arbitrary waveform at the time it is applied, because application is very unlikely to coincide with a mains zero-crossing. In addition there may be switch or other contact bounce.

The overvoltage detection circuit is formed by Q4, R1 and R2. An overvoltage condition is signaled by Q4 turning on which will happen when the base voltage, Vbe, of Q4 is about 0.6V below Vin. For a threshold voltage of Vin max = 30V the relationship between R1 and R2 can be found. Vin - Vin (R2/(R1 + R2)) = Vbe. Solving for Vin = 30V and Vbe = 0.6V gives R2 = 49 R1. R2 can be selected by choosing an arbitrary maximum base current for Q4 when a fault voltage of 400V is present, R2 = Vfault/Ibase. Solving for Vfault = 400V and Ibase = 1 mA gives R2 = 400k. This in turn gives R1 = 8k2. As Q4 will have a maximum Vbe of 0.6V almost any low voltage PNP transistor would be suitable such as a BC856B. In addition, R2 must have a size and voltage rating to handle the power dissipated, as well as the peak means voltage that will be present.

The current source is formed by Q1, Q2, R4 and R6 and is switched on or off by Q3 in conjunction with R3 and R5. R7 serves to speed up switching off the current source. As a DALI circuit typically consumes a maximum current of approximately 5mA to 8 mA a design current of Imax = 10mA is chosen to ensure that the current source will not be current limiting so that the output voltage, Vout, is approximately equal to Vin.

The current source is a well-known configuration with the load current set by R6 when Q1 is operating linearly, R6 = Vbe/Imax. Assuming Vbe = 0.5 and Imax = 10mA gives R6 = 50R. Q1 will only be subject to low voltages so can be chosen as any general purpose PNP transistor such as a BC856B.

R3, R4 and R5 are determined primarily by the base current requirements for Q2 for the smallest Vin. This will set minimum values for R4 and R3 + R5. As R3 can be subject to almost the peak voltage it is also desirable to maximize R3 in order to minimize power dissipation.

As Q2 could have the peak fault voltage of 400V across it a high voltage transistor such as an FMMT560 is chosen. Such a transistor can be assumed to have a minimum gain, β, of 80. Q2 base current, Ib2, is simply given by: Ib2 = Imax/β, giving Ib2 = 125µA.

Similar to Q2, Q3 could also have the peak fault voltage of 400V across it so is chosen to also be an FMMT560 device. Q3 base current can be determined: Ib3 = Ib2/β, giving Ib3 = 1.6µA. The operating voltages of Q3 can be chosen, the only real constraint being that Ve3 is sufficiently low to allow current to flow through R4 to allow Q2 to turn on. Choosing Vb3 <= 1.0V will allow a maximum value of R3 + R5 to be determined, R3 + R5 <= Vb3/Ib3 = 1.0V/1.6µA, giving R3 + R5 <= 625k. As it is desirous to have R3 high to minimize power dissipation, R3 can be chosen as: R3 = 400k. R5 can be chosen as R5 = 10k. We can now calculate Vb3 and Ve3. Vb3 = (R3 + R5) * Ib3 = (400k + 10k) *1.6uA = 0.66V and Ve3 = Vb3 + 0.6V = 0.66V + 0.6V + 1.3V. Vb2, will be at a potential of Vin - Vbe1 - Vbe2, for Vin min this will give Vb2 = Vin min - Vbe1 - Vbe2 = 8.5 - 0.6 - 0.6 = 7.3V. R4 can now be determined, R4 <= (Vb2 - Ve3)/Ib2 = (7.3V - 1.3V)/125µA = 48k. We can choose R4 = 47k.

It is desirous that the current source can be turned off quickly when a fault is detected; R7 helps speed this up. If R7 were not present, the shutoff speed would be determined by the speed at which Q2 will turn off when base drive is removed. This is essentially set by the emitter-base capacitance which needs to discharge via the base current in this case. Adding R7 actively pulls the base up when Q2 is turned off, switching it off faster. The choice of R7 is a compromise, a smaller R7 will result in a faster turn off but when Q2 is conducting there is a secondary path through R7 which increases the current through R4 and Q3. In normal operation R7 will have about 0.6 V across it and ideally R7 will have a small effect on the base current of Q2 to avoid significantly changing the current calculated through R4. 0.6V/R7 « 125 pA or R7 » 4.8k. Choosing R7 to be 5 to 10 times this value would be appropriate, i.e. 22k to 47k. Measurement shows a reduction in switch-off time from about 150 µs to about 40 µs by setting R7 = 47K, and a further reduction to between 20 and 30 µs when setting R7 = 24K. A suitable value appears to be R7 = 27K.

The current source switch Q3 is controlled by the output of the overvoltage detector Q4 in conjunction with C1, R8, D1 and previously discussed component R3. Q3 and hence the current source will be turned on when the base of Q3 is pulled suitably low.

On initial startup, or when the overvoltage detector Q4 has just switched off, capacitor C1 will be discharged and will begin to charge via R8 and R3. The base of Q3 will initially be at a high enough voltage such that Q3 is turned off. As C1 charges the base of Q3 will be increasingly pulled down until sufficiently low to switch Q3 on and enable the current source. C1 and R8 ensure that the turn on process is slow. This is particularly useful after a fault condition has been detected as it prevents the current source from turning on at the start of each mains half cycle, causing a so called "rabbit ears" output.

When an over-voltage fault condition is detected Q4 will turn on allowing C1 to discharge through Q4 and R8, which in turn raises the base voltage of Q3 and turns the current source off. R8 serves to limit the current through Q4 and is chosen to be small so that the turn off is rapid. A value of R8 = 1 k is chosen. This is significantly less than the value of R3 (400k) allowing it to be ignored in further calculations.

During normal operation Vin will be pulled to 0V for DALI signaling. D1 ensures that when this happens C1 is not discharged, ensuring that the current source is not held off when Vin returns to a normal voltage level. As D1 is never reverse biased and in series with the large resistance R3, a small signal diode such as a D1 N4148 is suitable to use.

C1 is chosen to provide an appropriate time constant to prevent Q3 turning on each mains half cycle during a fault condition. When Q3 and the current source is off, Q3e will sit at approximately 2 x Vbe drops below Vin. C1 will need to charge roughly this amount so that Q3b is pulled low enough to start to turn on Q3 (the Vbe drop of Q3 being roughly negated by the drop across D1). Using a single time constant for R3 (ignoring R8) and C1 (to provide plenty of margin) would give R3 * C1 >> 10 ms (half mains cycle) or C1 >> 10 ms/400k = 25nF. A value of C1 = 100nF is chosen to provide plenty of margin and to allow for variation due to tolerances.

During a high voltage condition there is a finite switch-off time (measured as about 20-30 µs) during which the peak fault voltage may be present on the output. A final output Zener diode clamp DZ1 is fitted to limit the voltage to the maximum operating voltage of 30V. As the maximum current is limited at 10 mA by the current source Q1 and Q2, a small Zener diode is suitable such as a BZX84-30 which can handle the required power dissipation of 300mW.

The reader will now appreciate that present invention provides an overvoltage protection circuit using a minimal amount of high voltage components and no high power components. The protection circuit is able to switch off quickly and will stay off until the fault condition is gone.

Whilst the above disclosure was made with reference to a DALI bus, the concept can quite clearly be applied to other types of building automation bus such as but not limited to LON, EIB, KNX, C-Bus or BACNET.

Further advantages and improvements may very well be made to the present invention without deviating from its scope. Although the invention has been shown and described in what is conceived to be the most practical and preferred embodiment, it is recognized that departures may be made therefrom within the scope and spirit of the invention, which is not to be limited to the details disclosed herein but is to be accorded the full scope of the claims so as to embrace any and all equivalent devices and apparatus. Any discussion of the prior art throughout the specification should in no way be considered as an admission that such prior art is widely known or forms part of the common general knowledge in this field.

In the summary of the invention, except where the context requires otherwise due to express language or necessary implication, the word "comprising" is used in the sense of "including", i.e. the features specified may be associated with further features in various embodiments of the invention.

## Claims

1. An overvoltage protection circuit comprising:
a supply input;
a supply output;
a voltage monitor connected to monitor the supply input;
a current source driven by the supply input and driving the supply output; and
a switching circuit to enable or disable the current source driven by an output of the voltage monitor;
wherein:
when the supply input voltage is less than a predetermined threshold the current source is enabled; and
when the supply input voltage is greater than said predetermined threshold voltage the current source is disabled.

2. An overvoltage protection circuit as in claim 1, wherein the voltage monitor is directly connected to the supply input.

3. An overvoltage protection circuit as in claim 1 or claim 2, wherein the voltage monitor output:
is in a high impedance state when the supply input voltage is less than said predetermined threshold voltage and in a low impedance state when the supply input voltage is greater than said predetermined threshold voltage;
is connected to a control input of the switching circuit via a diode; and is connected to a resistor capacitor network, such that when the supply input transitions from less than the predetermined threshold voltage to greater than the predetermined threshold voltage the switching circuit is switched to disable the current source without delay, and when the supply input transitions from greater than the predetermined threshold to less than the predetermined threshold voltage the switching circuit is switched to enable the current source with a delay determined by the resistor capacitor network.

4. An overvoltage protection circuit as in any one of claims 1 to 3, wherein the current source comprises a first and second PNP transistor, wherein:
the first transistor emitter is connected directly to the supply input;
the second transistor emitter is connected to the supply input via a first resistor;
the supply output is connected to the second transistor collector;
the base of the first transistor is connected to the emitter of the second transistor;
the base of the second transistor is connected to the collector of the first transistor;
the base of the second transistor and the collector of the transistor are connected via a second resistor to supply ground,
and further wherein the first transistor base and the second transistor base are connected by a third resistor.
